Europäisches Patentamt

European Patent Office

Office européen des brevets

(11) Veröffentlichungsnummer: **0 335 997**
**B1**

# (12) EUROPÄISCHE PATENTSCHRIFT

(45) Veröffentlichungstag der Patentschrift:
**24.10.90**

(21) Anmeldenummer: **88105489.4**

(22) Anmeldetag: **07.04.88**

(51) Int. Cl.⁵: **F16K 35/02**, F16K 27/04,
F16K 3/08

(54) **Ventiloberteil.**

(43) Veröffentlichungstag der Anmeldung:
**11.10.89 Patentblatt 89/41**

(45) Bekanntmachung des Hinweises auf die Patenterteilung:
**24.10.90 Patentblatt 90/43**

(84) Benannte Vertragsstaaten:
**AT BE CH DE ES FR GB GR IT LI LU NL SE**

(56) Entgegenhaltungen:
**FR-A- 1 558 954**
**US-A- 2 250 356**

(73) Patentinhaber: **Flühs Drehtechnik GmbH., Lösenbacher Landstrasse 2, D-5880 Lüdenscheid 6(DE)**

(72) Erfinder: **Lange, Peter, Teutonenstrasse 80 b, D-5880 Lüdenscheid(DE)**

(74) Vertreter: **Dörner, Lothar, Dipl.-Ing., Stresemannstrasse 15, D-5800 Hagen 1(DE)**

## Beschreibung

Technisches Gebiet:

Die Erfindung bezieht sich auf ein Ventiloberteil für Gasarmaturen mit einem hülsenartigen Kopfstück, an dessen dem Gaszustrom zugewandter Stirnseite eine erste, mit Durchtrittsöffnungen versehene Steuerscheibe aus keramischem Material vorgesehen ist, mit einer in dem Kopfstück drehbaren Spindel, an die T-förmig ein zwischen Anschlägen in dem Kopfstück drehbarer Quersteg angeformt ist, und mit einem hohlzylindrischen Mitnehmer, dessen der Spindel zugewandter Rand den Quersteg aufnimmt und an dessen dem Gaszustrom zugewandter Stirnseite eine zweite mit Durchtrittsöffnungen versehene Steuerscheibe aus keramischem Material vorgesehen ist, die an der ersten Steuerscheibe anliegt und deren Durchtrittsöffnungen öffnet oder schließt.

Stand der Technik:

Ein Ventiloberteil vorgenannter Ausbildung ist aus EP-B1-0088334 bekannt. Bei dem bekannten Ventiloberteil dient der als Vollsteg ausgebildete Quersteg an der Spindel der Mitnahme der hohlzylindrischen Hülse und der Anschlagbegrenzung. Die Hülse gewährleistet ungestörte Mediumführung unter Ausnutzung der ganzen Fläche der keramischen Steuerscheiben. Bei dem bekannter Ventiloberteil sind als Anschläge in dem Kopfstück Nasen vorgesehen. In den Steuerscheiben sind jeweils zwei sektorförmig ausgebildete, diametral sich gegenüberliegende Durchtrittsöffnungen vorgesehen. Zum vollständigen Öffnen und Schließen der Durchtrittsöffnungen ist eine Drehbewegung der Spindel zwischen den Anschlägen von jeweils 90° notwendig. Bei dem aus EP-B1-0 129 659 bekannten Ventiloberteil ist ein mit einer Aussparung versehener T-förmiger Quersteg verwendet. Der Anschlag in dem Kopfstück ist von den Enden eines Teilrings gebildet. Jede Steuerscheibe hat eine Durchtrittsöffnung nach Art eines Halbkreises. Zum vollständigen Öffnen und Schließen der Durchtrittsöffnungen ist eine Drehbewegung der Spindel von jeweils 180° notwendig.

Die bekannten Ventiloberteile sind für den Einsatz in Sanitärarmaturen vorgesehen, dienen also der Steuerung eines flüssigen Mediums. Die Erfindung bezweckt, die Ventiloberteile bei Gasarmaturen, also zur Steuerung eines gasförmigen Mediums, zu verwenden. Bei Gasarmaturen besteht aber nach den DVGW-Richtlinien die Notwendigkeit, die Spindel zum Öffnen der Gasarmatur zunächst entgegen der Wirkung einer Feder in das Innere des Kopfstücks zu drücken, bevor ihre Drehbewegung um 90° zum Öffnen durchgeführt werden darf. Die aus US-A 2 250 356 und FR-A 1 558 954 bekannten Gasarmaturen weisen daher an der Spindel radial befestigte Stifte oder Vorsprünge auf, die in Schließstellung des als Küken ausgebildeten Schließorgans der Gasarmatur in Zwangsanlage an einem Anschlag oder in einer Öffnung einer feststehenden Kappe gehalten sind, um das Öffnen der Gasarmatur zu verhindern. Entgegen der Wirkung der Feder ist die Spindel axial beweglich in eine Lage, in der sie von dem Anschlag oder der Öffnung freikommt und in eine Stellung zwangsgeführt gedreht werden kann, die die Offenstellung des Kükens und damit der Gasarmatur bestimmt.

Darstellung der Erfindung:

Der Erfindung liegt die Aufgabe zugrunde, ein Ventiloberteil der eingangs genannten Art, also ein Ventiloberteil mit keramischen Steuerscheiben, deren Durchtrittsöffnungen bei Drehung der Spindel um jeweils 90° vollständig geöffnet oder geschlossen werden, so auszugestalten, daß es den Anforderungen bei Gasarmaturen genügt. Gemäß der Erfindung wird diese Aufgabe dadurch gelöst, daß in dem Kopfstück eine teilringförmige Ausnehmung mit den um etwa 90° versetzten Anschlägen und diametral gegenüber einem der Anschläge ein Spalt vorgesehen sind, die in der Schließlage des T-förmigen Querstegs von dessen Enden durchsetzt sind und von denen in der entgegen der Wirkung einer Feder herbeigeführten Öffnungslage des T-förmigen Querstegs die Ausnehmung weiterhin von dessen einem Ende durchsetzt ist, der Spalt von dem in Axialrichtung herausgedrückten anderen Ende frei ist.

Das in eine Gasarmatur eingebaute Ventiloberteil nach der Erfindung wird im geschlossenen Zustand durch die Feder in der einen Endlage gehalten. In dieser Endlage liegt das eine Ende des T-förmigen Querstegs an dem einen der Anschläge an; das andere Ende des T-förmigen Querstegs durchsetzt den Spalt. In dieser Stellung ist die Spindel nicht drehbar. Das Ventiloberteil und mit ihm die Gasarmatur sind geschlossen. Zum Öffnen muß die Spindel in Axialrichtung entgegen der Wirkung der Feder in das Kopfstück gedrückt werden, und zwar soweit, bis die Feder vollständig zusammengedrückt ist und einen Block bildet.

Am Ende dieser Bewegung befindet sich das eine Ende des T-förmigen Querstücks immer noch an dem Anschlag in der ringförmigen Ausnehmung. Das andere Ende des T-förmigen Querstücks ist jedoch aus dem Spalt herausgedrückt. Die Spindel kann jetzt soweit gedreht werden, bis das eine Ende des T-förmigen Querstegs gegen den anderen Anschlag stößt. Diese Drehbewegung ist auf 90° begrenzt. Während der gesamten beschriebenen Bewegung durchsetzt der T-förmige Quersteg mit seinem an die innere Stirnseite anschließenden Bereich die Ausnehmungen in dem Mitnehmer, so daß die Bewegung der Spindel auf den Mitnehmer übertragen wird. Der Mitnehmer überträgt seinerseits die Bewegung auf die zweite Steuerscheibe, die die ruhende Steuerscheibe öffnet und schließt.

Bevorzugte Ausgestaltungen und Weiterbildungen der Erfindung sind in den Unteransprüchen angegeben.

Kurze Beschreibung der Zeichnung:

Ein Ausführungsbeispiel der Erfindung ist in der Zeichnung dargestellt und wird im folgenden näher beschrieben. Es zeigen:

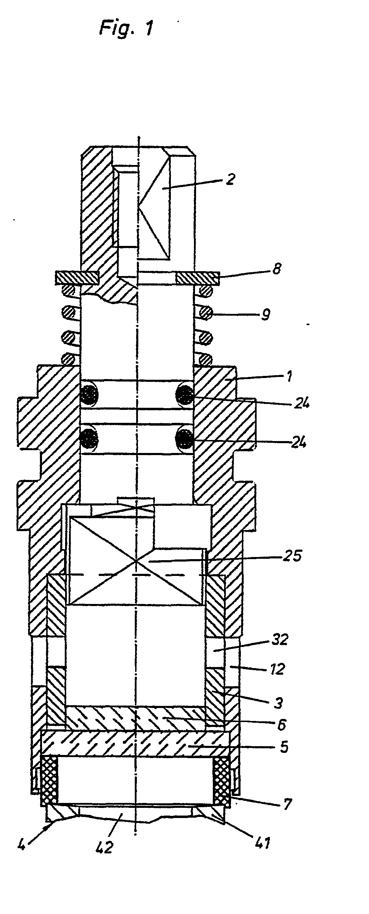

Fig. 1 ein Ventiloberteil im vergrößerten Längsschnitt;

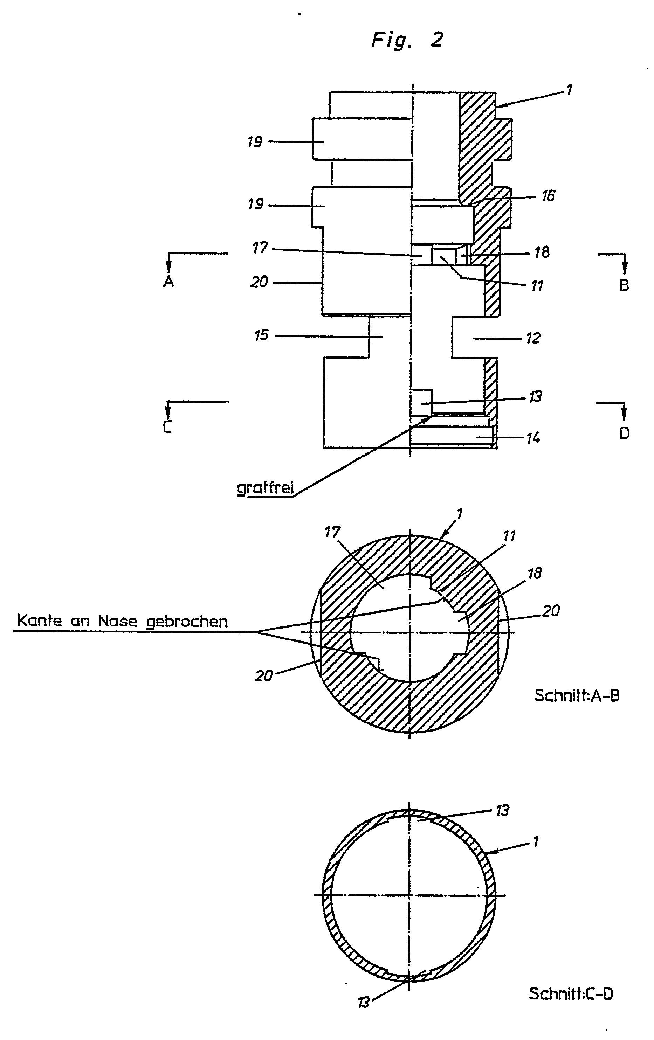

Fig. 2 das bei dem in Fig. 1 dargestellten Ventiloberteil verwendete Kopfstück etwas verkleinert teilweise in Seitenansicht, teilweise im Längsschnitt sowie in zwei Querschnitten;

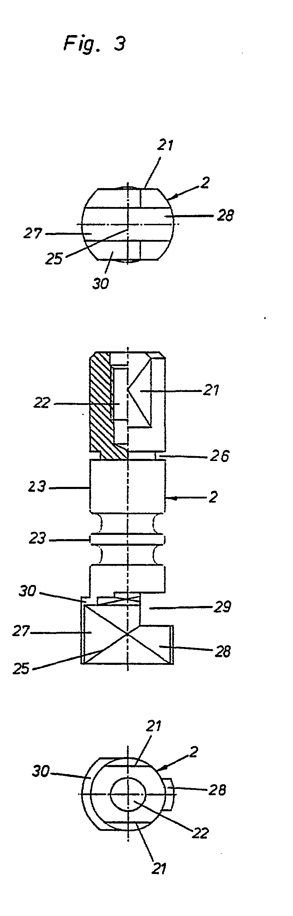

Fig. 3 die bei dem in Fig. 1 dargestellten Ventiloberteil verwendete Spindel verkleinert teilweise in Seitenansicht, teilweise im Längsschnitt sowie in beiden Stirnansichten;

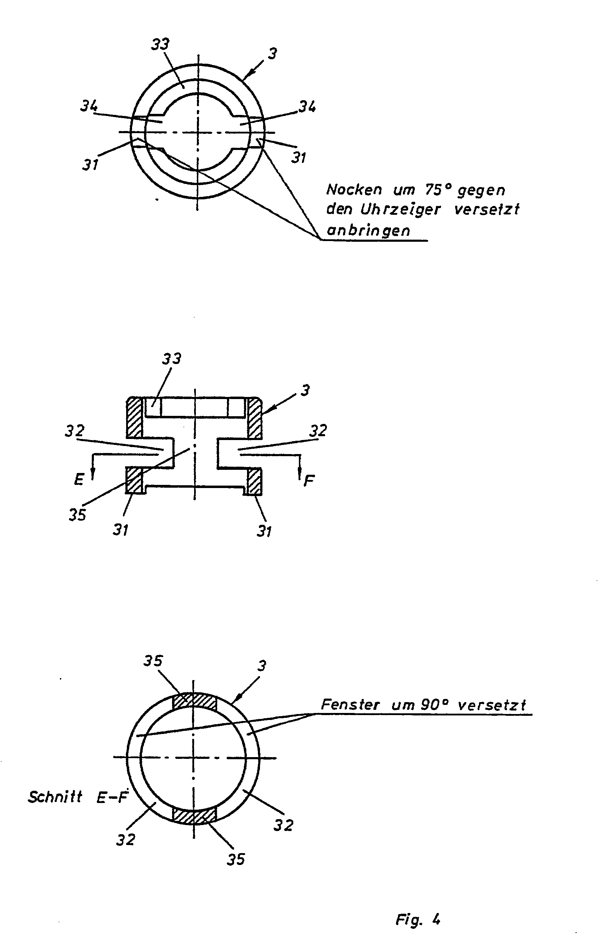

Fig. 4 den bei dem in Fig. 1 dargestellten Ventiloberteil verwendeten Mitnehmer verkleinert im Längsschnitt, einer Stirnansicht sowie einem Querschnitt;

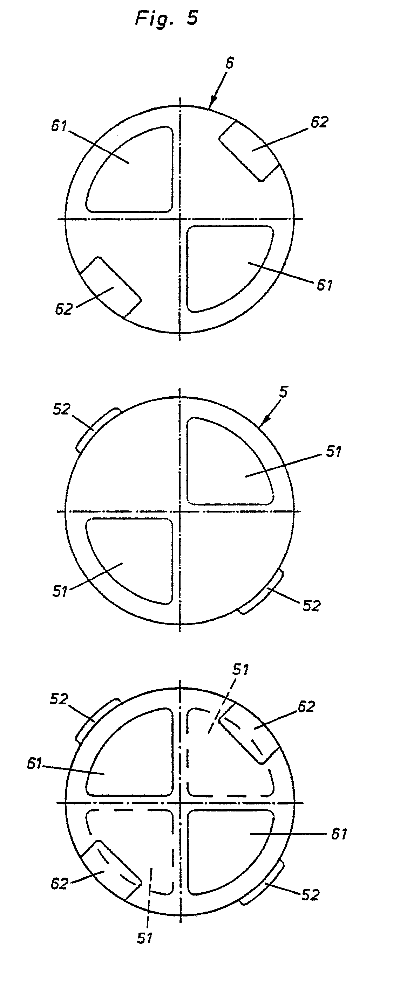

Fig. 5 die bei dem in Fig. 1 dargestellten Ventiloberteil verwendete drehbare Steuerschreibe, die zugehörige feststehende Steuerscheibe sowie die aneinanderliegenden Steuerscheiben in Schließstellung jeweils in Stirnansicht und vergrößert.

Bester Weg zur Ausführung der Erfindung:

Das als Ausführungsbeispiel gewählte Ventiloberteil weist ein Kopfstück 1, eine das Kopfstück 1 mittig durchsetzende und in ihm radial geführte Spindel 2 sowie einen mit der Spindel 2 formschlüssig verbundenen und im Kopfstück 1 radial geführten Mitnehmer 3 auf. Das Ventiloberteil wird in ein Gehäuse 4 einer Gasarmatur eingesetzt, von der nur ein Teil des Gaszuströmkanals dargestellt ist. Das Kopfstück 1 ist hülsenartig ausgebildet, besteht also aus einem symmetrischen Hohlkörper, allerdings mit unterschiedlichen Innendurchmessern, dessen beide Stirnflächen offen sind. Gaszuströmseitig weist das Kopfstück 1 im Bereich der Stirnseite eine Halterung für eine erste Steuerscheibe 5 und eine über die Stirnseite vorstehenden Dichtring 7 auf. Auf der dem Gasstrom zugewandten Stirnseite des Mitnehmers 3 ist eine zweite Steuerscheibe 6 vorgesehen. Außerhalb des Kopfstücks 1 ist an der Spindel 2 ein Sprengring 8 befestigt. An dem Sprengring 8 und der benachbarten Stirnseite des Kopfstücks 1 ist eine Feder 9 abgestützt.

Die Steuerscheibe 5 ist in der Ansicht kreisförmig. Sie weist zwei sich diametral gegenüberliegende sektorförmige Durchtrittsöffnungen 51 auf. Mittig in der Symmetrieebene zwischen den Durchtrittsöffnungen 51 sind radiale Vorsprünge 52 an der Steuerscheibe 5 vorgesehen.

Im Anschluß an die Stirnseite sind in dem Kopfstück 1 Durchtrittsöffnungen 12 vorgesehen. Zur Halterung ist die Innenwandung des Kopfstücks 1 im Anschluß an die zulaufseitige Begrenzung der Durchtrittsöffnungen 12 mit in Längsrichtung verlaufenden Ausnehmungen 13 für die Aufnahme der radialen Vorsprünge 52 am Rand der keramischen Steuerscheibe 5 und am freien Ende mit einer ringförmigen Ausnehmung 14 für die Aufnahme des Dichtungsrings 7 versehen. Die Durchtrittsöffnungen 12 in dem Kopfstück 1 sind von einem ringförmigen Schlitz gebildet, der durch zwei Längsstege 15 unterteilt ist. Auf der dem Gasstrom abgewandten Seite der Durchtrittsöffnungen 12 ist das Kopfstück 1 mit zwei Schultern versehen; im Anschluß an die äußere Schulter 16 mit einem nach innen vorspringenden Flansch 11.

Der Innenflansch 11 weist eine ringförmige Ausnehmung 17 auf. Die Enden der ringförmigen Ausnehmung 17 bilden Anschläge für die Spindel 2. Der ringförmigen Ausnehmung 17 diametral gegenüberliegend ist ein Spalt 18 in dem Innenflansch 11 vorgesehen.

Außen sind im Anschluß an die Durchtrittsöffnungen 12 ebene Flächen 20 vorgesehen, mit denen das Kopfstück 1 in dem Gehäuse 4 einer nicht dargestellten Gasarmatur verdrehsicher gehalten ist. Im Anschluß an die ebenen Flächen 20 sind in Axialrichtung versetzt zwei Außenflansche 19 vorgesehen, zwischen denen ein nicht dargestellter Dichtring gehalten ist. Der Dichtring dichtet das Kopfstück 1 außen gegen das Gehäuse 4 der Gasarmatur ab.

Die Spindel 2 ist im wesentlichen massiv ausgeführt und weist einen Steckkopf auf. Sie ist an ihrer dem Gaszustrom abgewandten Stirnseite außen mit zwei Parallelflächen 21 ausgeführt und innen mit einem Sackloch 22 mit Innengewinde für die Befestigung eines nicht dargestellten Drehgriffs versehen. Außen sind an der Spindel 2 Ringflächen 23 vorgesehen, mit der die Spindel 2 in dem Kopfstück 1 radial geführt ist. Die Ringflächen 23 sind durch eine Ringkerbe 26, in der der Sprengring 8 gehalten ist, und durch Nuten unterbrochen, in denen Dichtringe 24 untergebracht sind, die die Dichtung zwischen Spindel 2 und Kopfstück 1 übernehmen.

Die Spindel 2 ist in dem Kopfstück begrenzt drehbar. Auf der dem Sackloch 22 entgegengesetzten Seite ist zu diesem Zweck außen an die Spindel 2 ein T-förmiger Quersteg 25 angeformt.

Ein Ende 27 des T-förmigen Quersteg 25 durchsetzt die ringförmige Ausnehmung 17. Das entgegengesetzte Ende 28 des Querstegs 25 ist in dem Spalt 18 in dem Innenflansch 11 in Axialrichtung bewegbar. An diesem anderen Ende 28 weist der Quersteg 25 eine Aussparung 29 auf.

Die ringförmige Ausnehmung 17 in dem Innenflansch 11 verläuft über einen Winkel von 90° zuzüglich des von der Breite des T-förmigen Querstegs 25 bestimmten Winkels. Unabhängig von der Axialstellung der Spindel 2 ist das eine Ende 27 des Querstegs 25 stets im Bereich der ringförmigen Ausnehmung 17 angeordnet. Die Enden der ringförmigen Ausnehmung 17 bilden die Anschläge für die Begrenzung des Drehwinkels der Spindel um 90°. Das andere Ende 28 des Querstegs 25 ist in dem Spalt 18 geführt. Bei geschlossenem Ventiloberteil befindet sich der stehen-gebliebene Teil dieses anderen Endes 28 in dem Spalt 18. Die Spindel 2 kann dann nicht gedreht werden. Wird die Spindel 2 entgegen der Wirkung der Feder 9 in das Kopfstück 1 gedrückt, gelangt die Aussparung 29 auf die Höhe des Flanschs 11; die Spindel kann um 90° gedreht werden. Die Aussparung 29 auf der der Spindel 2 zugewandten Seite des Querstegs 25 ist im wesentlichen der Dicke und der Breite des Innenflanschs 11 angepaßt. Am Übergang von dem T-förmigen Quersteg 25 in die Spindel 2 ist ein Flansch 30 vorgesehen, der parallel zu den Seitenflächen des Querstegs ausgespart ist. Die Aussparungen ermöglichen die Montage der Spindel 2 an dem Innenflansch 11 vorbei. In geschlossenem Zustand liegt der Flansch 30 an der Schulter 16 an.

Der Mitnehmer 3 ist als hohlzylindrische Hülse ausgebildet, die mit einer Stirnseite an einer Schulter in dem Kopfstück 1 anliegt, zwischen denen ein nicht dargestellter Gleitring vorgesehen sein kann. Zur Geräuschdämpfung kann der Mitnehmer 3 eine ebenfalls nicht dargestellte Platte aus Kunststoff aufnehmen, von der parallele Stifte ausgehen, die in den Hohlraum hineinragen. Der Mitnehmer 3 ist mit Durchtrittsöffnungen 32 in der Wandung versehen, die von einem ringförmigen Schlitz gebildet sind, der durch zwei Längsstege 35 unterteilt ist. Die Durchtrittsöffnungen 32 in dem Mitnehmer 3 und die Durchtrittsöffnungen 12 in dem Kopfstück 1 liegen in derselben Querebene. Der ringförmige Schlitz in dem Kopfstück 1 ist in Axialrichtung des Ventiloberteils breiter als der in dem Mitnehmer 3. Die Längsstege 15, 35 sind bei vollständig geöffneten Durchtrittsöffnungen 51 in der ersten Steuerscheibe 5 in derselben Längsmittelebene angeordnet. Auf der dem Gaszustrom zugewandten Stirnseite ist der Mitnehmer 3 mit Nocken 31 versehen, die in Ausnehmungen 62 am Rand der zweiten Steuerscheibe 6 eingreifen.

Beide Steuerscheiben 5, 6 bestehen aus keramischem Material. Die zweite Steuerscheibe 6 liegt auf der dem Gaszustrom abgewandten Seite an der ersten Steuerscheibe 5 an. Sie ist mit zwei diametral sich gegenüberliegenden sektorförmigen Durchtrittsöffnungen 61 versehen. Die Größe der Steuerscheiben 5 und 6 ist ebenso wie die ihrer Durchtrittsöffnungen 51 und 61 gleich. Die zweite Steuerscheibe 6 öffnet und schließt die Durchtrittsöffnung 51 der ersten Steuerscheibe 5 durch Drehen der Spindel 2. Der der Spindel 2 zugewandte Rand 33 des Mitnehmers 3 ist nach innen gezogen und mit diametral sich gegenüberliegenden radial verlaufenden Ausnehmungen 34 versehen, in die der Quersteg 25 der Spindel 2 eingreift. Die lichte Weite des eingezogenen Randes 33 ist kleiner als der Außendurchmesser der Ringfläche 23, deren dem Quersteg 25 benachbarte somit als Anschlag dient. Die Höhe des eingezogenen Randes 33 der hohlzylindrischen Hülse und die Höhe des Innenflansches in dem Kopfstück 1 sind zusammen etwa gleich der Höhe des Querstegs 25 an der Spindel 2.

Das Kopfstück 1 drückt über die erste ortsfeste Steuerscheibe 5 den Dichtring 7 auf einen Ventilsitz 41 im Gaszustrom 42 des Gehäuses 4. Nach der Befestigung des Kopfstücks 1 an dem Gehäuse bleibt die Lage des Dichtrings 7 unverändert. Durch Drücken der Spindel 2 entgegen der Wirkung der Feder 9 kommt das Ventiloberteil in eine Stellung, in der es geöffnet werden kann: Die Aussparung 29 befindet sich auf der Höhe des Innenflansches 11, das zugehörige Ende 28 des Querstegs darunter. Durch Drehen der Spindel 2 wird die zweite Steuerscheibe 6 bezogen auf die erste Steuerscheibe 5 in Anlage miteinander gedreht, sodaß die Durchtrittsöffnung 51 in der ersten Steuerscheibe 5 durch die zweite Steuerscheibe 6 vollständig oder im gewünschten Maß geöffnet und geschlossen wird. Die ringförmige Ausnehmung 17 begrenzt zusammen mit dem Ende 27 des Querstegs die Drehbewegung. Beim Drehen der Spindel 2 aus der Offenstellung des Ventiloberteils in die Schließstellung fluchtet letzlich das mit der Aussparung 29 versehene Ende 28 des Querstegs 25 mit dem Spalt 18; die Spindel 2 wird von der Feder 9 in die Ausgangslage zurückgedrückt.

Gewerbliche Verwertbarkeit:

Das Ventiloberteil ist Bestandteil von Armaturen, die bei der Gasversorgung eingesetzt werden, dient also zur Steuerung der Menge des aus einer Armatur austretenden Gases. Die Verwendung des Ventiloberteils zur Steuerung anderer Medien, z.B. von Wasser, ist möglich.

**Patentansprüche**

1. Ventiloberteil für Gasarmaturen mit einem hülsenartigen Kopfstück (1), an dessen dem Gaszustrom zugewandter Stirnseite eine erste, mit Durchtrittsöffnungen (51) versehene Steuerscheibe (5) aus keramischem Material vorgesehen ist, mit einer in dem Kopfstück (1) drehbaren Spindel (2), an die T-förmig ein zwischen Anschlägen in dem Kopfstück drehbarer Quersteg (25) angeformt ist, und mit einem hohlzylindrischen Mitnehmer (3), dessen der Spindel (2) zugewandter Rand den Quersteg aufnimmt und an dessen dem Gaszustrom zugewandter Stirnseite eine zweite mit Durchtrittsöffnungen (61) versehene Steuerscheibe (6) aus keramischem Material vorgesehen ist, die an der ersten Steuerscheibe (5) anliegt und deren Durchtrittsöffnungen (51) öffnet oder schließt, dadurch gekennzeichnet, daß in dem Kopfstück (1) eine teilringförmige Ausnehmung (17) mit den um etwa 90° versetzten Anschlägen und diametral gegenüber einem der Anschläge ein Spalt (18) vorgesehen sind, die in der Schließlage des T-förmigen Querstegs (25) von dessen Enden (27; 28) durchsetzt sind, und von denen in der entgegen der Wirkung einer Feder (9) herbeigeführten Öffnungslage des T-förmigen Querstegs (25) die Ausnehmung (17) weiterhin von dessen einem Ende (27) durchsetzt ist, der Spalt (18) von dem in Axialrichtung herausgedrückten anderen Ende (28) frei ist.

2. Ventiloberteil nach Anspruch 1, dadurch gekennzeichnet, daß das Kopfstück (1) mit einem Innenflansch (11) versehen ist, der die ringförmige Ausnehmung (17), deren Winkel 90° zuzüglich des von der Breite des T-förmigen Querstegs (25) bestimmten Winkels beträgt, sowie diametral dem einen der Anschläge gegenüber den Spalt (18) in der Breite des T-förmigen Querstegs (25) aufweist, durch den das andere Ende (28) des T-förmigen Querstegs (25) axial bewegbar ist, das auf der der Spindel (2) zugewandten Seite mit einer der Dicke und Breite des Innenflansches (11) im wesentlichen gleichen Aussparung (29) versehen ist.

3. Ventiloberteil nach Anspruch 1 oder 2, dadurch gekennzeichnet, daß am Übergang von dem T-förmigen Quersteg (25) in die Spindel (2) ein Flansch (30) vorgesehen ist, der parallel zu den Seitenflächen des Querstegs ausgespart ist.

4. Ventiloberteil nach Anspruch 3, dadurch gekennzeichnet, daß an der Spindel (2) im Anschluß an den Flansch (30) Ringflächen (23) vorgesehen sind, die durch Ringnuten für die Aufnahme von Dichtringen (24) und durch eine Ringkerbe (26) für die Aufnahme eines Sprengrings (8) zur Abstützung der Feder (9) unterbrochen sind.

5. Ventiloberteil nach einem der Ansprüche 1 bis 4, dadurch gekennzeichnet, daß an der dem Quersteg (25) abgewandten Stirnseite der Spindel (2) innen ein Sackloch (22) mit Gewinde, außen zwei parallele Flächen (21) vorgesehen sind.

**Revendications**

1. Tête de robinet gourdes robinets de gaz, comprenant un élément de tête (1) en forme de douille dont la face frontale dirigée vers l'arrivée de gaz comporte un premier disque de commande (5) en matériau céramique muni d'ouvertures de passage (51), une broche (2) tournant dans l'élément de tête (1) sur laquelle est conformé en T une traverse (25) pouvant tourner dans l'élément de tête entre des butées, et un toc d'entraînement (3) cylindrique creux dont le bord dirigé vers la broche (2) reçoit la traverse et dont la face frontale dirigée vers le flux de gaz est équipée d'un second disque de commande (6) en céramique muni d'ouvertures de passage (61) lequel est appliqué contre le premier disque de commande (5) et ouvre ou ferme les ouvertures de passage (51) de celui-ci, caractérisée en ce que dans l'élément de tête (1) sont prévus un évidement (17) en forme de bague partielle avec les butées décalées d'environ 90° et, diamétralement en face de l'une desdites butées, une fente (18), lesquels, dans la position de fermeture de la traverse (25) en forme de T, sont traversés par les extrémités (27; 28) de celle-ci dont l'une (27) continue, dans la position d'ouverture de la traverse (25) en forme de T provoquée contre l'action d'un ressort (9), à traverser les évidements (17), alors que la fente (18) est libérée de l'autre extrémité (28) expulsée dans le sens axial.

2. Tête de robinet selon la revendication 1, caractérisée en ce que l'élément de tête (1) est muni d'une bride intérieure (11) laquelle comporte l'évidement annulaire (17), dont l'angle est de 90° augmenté de l'angle déterminé par la largeur de la traverse (25) en forme de T, ainsi que, diamétralement opposé à l'une des butées, la fente (18) dans la largeur de la traverse (25) en forme de T, à travers laquelle l'autre extrémité (28) de la traverse (25) en forme de T peut être déplacée axialement, ladite extrémité présentant, du côté dirigé vers la broche (2), un évidement (29) d'une épaisseur et d'une largeur sensiblement égales à celles de la bride intérieure (11).

3. Tête de robinet selon l'une des revendications 1 ou 2, caractérisée en ce que, à la transition entre la traverse (25) en forme de T et la broche (2), est prévue une bride (30) qui est évidée parallèlement aux surface latérales de la traverse.

4. Tête de robinet selon la revendication 3, caractérisée en ce que, à la suite de la bride (30), la broche (2) comporte des surfaces d'anneau (23) qui sont séparées par des rainures annulaires pour la réception de joints d'étanchéité (24) et par une gorge annulaire (26) destinée à recevoir un circlip (8) pour le soutien du ressort (9).

5. Tête de robinet selon l'une des revendications 1 à 4, caractérisée en ce que la face frontale de la broche (2) opposée à la traverse (25) comporte, à l'intérieur, un trou borgne (22) avec filetage et, à l'extérieur, deux surfaces parallèles (21).

**Claims**

1. Upper part of valve for gas fittings, with a sleeve-like head piece (1), whose end face oriented towards the gas stream is provided with a first control disc (5) provided with flow apertures (51) and consisting of ceramic material, having a spindle (2) rotatable in the head piece (1) and on which a transverse web (25) is formed in a T-shaped manner so as to rotate between stops in the head piece, and having a hollow cylindrical carrier (3), whose edge facing the spindle (2) receives the transverse web and whose end face oriented towards the gas stream is provided with a second control disc (6), which is provided with flow apertures (61) and consists of ceramic material, and which bears against the first control disc (5) and opens or closes its flow apertures (51), characterised in that in the head piece (1) a part-annular recess (17) with the stops offset by approximately 90°, and diametrically opposite the stop, a slot (18) are provided and are penetrated in the closed position of the T-shaped transverse web (25) by its ends (27; 28), the recess (17) being further penetrated by one end (27) of the T-shaped transverse web (25) when the latter is in the open position effected against the action of a spring (9), and the slot (18) being free from the other end (28) which is pushed out in the axial direction.

2. Upper part of a valve according to claim 1, characterised in that the head piece (1) is provided with an inner flange (11), which comprises the annular recess (17), whose angle is 90° including the angle defined by the width of the T-shaped transverse web (25), and comprising the slot (18) diametrically opposite one of the stops, in the width of the T-shaped transverse web (25), by which the other end (28) of the T-shaped transverse web (25) is axially movable, this end being provided on the side facing the spindle (2) with a recess (29) substantially corresponding to the thickness and width of the inner flange (11).

3. Upper part of a valve according to claim 1 or 2, characterised in that at the transition from the T-shaped transverse web (25) to the spindle (2), a flange (30) is provided, which is recessed parallel to the side faces of the transverse web.

4. Upper part of a valve according to claim 3, characterised in that annular faces (23), which are interrupted by annular grooves for receiving sealing rings (24) and by an annular notch (26) for receiving a spring ring (8) to support the spring (9), are provided on the spindle (2) at the join with the flange (30).

5. Upper part of a valve according to one of claims 1 to 4, characterised in that a blind hole (22) with a thread is provided on the inside of the end face of the spindle (2) facing away from the transverse web (25), and two parallel faces (21) are provided on the outside.

**Fig. 1**

## Fig. 2

gratfrei

Kante an Nase gebrochen

Schnitt:A-B

Schnitt:C-D

*Fig. 3*

Nocken um 75° gegen den Uhrzeiger versetzt anbringen

Fenster um 90° versetzt

Schnitt E-F

*Fig. 4*

## Fig. 5